# EUROPÄISCHE PATENTSCHRIFT

(11) **EP 1 366 654 B1**
(45) Veröffentlichungstag und Bekanntmachung des Hinweises auf die Patenterteilung: **14.11.2007**
(21) Anmeldenummer: 03011394.8
(22) Anmeldetag: 20.05.2003
(51) Int. Cl.: A01F 15/08

(54) **Rundballenpresse**
Round baler
Presse à balles cylindriques

(30) Priorität: 01.06.2002 DE 10224394
(43) Veröffentlichungstag der Anmeldung: 03.12.2003
(73) Patentinhaber: DEERE & COMPANY, Moline, Illinois 61265-8098 (US)
(72) Erfinder: Viaud, Jean, 70100 Gray (FR)
(74) Vertreter: Magin, Ludwig Bernhard

(56) Entgegenhaltungen:
- EP-A- 0 258 528
- EP-A- 1 151 657
- DE-C- 4 315 374
- US-A- 3 974 632
- US-A1- 2002 121 200

## Beschreibung

Die Erfindung betrifft eine Rundballenpresse gemäß dem Oberbegriff des Anspruchs 1. Ein Rundballenpresse dieser Art ist aus der Druckschrift US-A-3 974 632 bekannt.

Das Buch FMO-141B Ausgabe D-00 zeigt auf Seite 153 eine Rundballenpresse mit festen Seitenwänden, zwischen denen sich ortsfeste und positionsveränderliche drehbare Rollen erstrecken, über die Riemen geführt werden können. Einige der Rollen sind in einem Träger aufgenommen, der vertikal schwenkbar ist. Die Riemen verlaufen auch über Rollen an einem Spannarm, der unter der Spannung einer Feder stets in eine die Riemen spannende Stellung gedrängt wird. Der Vorteil dieser Bauart liegt darin, dass der Träger mit den wenigen Rollen leicht ist und großer Stellkräfte nicht bedarf. Nachteilig ist jedoch, dass der Träger weit angehoben werden muss, damit der fertige Rundballen ausgeworfen werden kann, zumal im Bodenbereich ein zweiter Satz Riemen vorgesehen ist, auf dem der Rundballen während seiner Bildung ruht.

Die DE-A1-198 51 470 offenbart eine Rundballenpresse mit nur einem einzigen Satz von Riemen, die über ortsfeste und positionsveränderliche Rollen in einem festen Gehäuse und einem schwenkbaren Gehäuseteil geführt sind. Es ist ebenfalls ein Spannarm vorgesehen, der die Riemen stets gespannt hält. Der Nachteil dieser Bauart besteht in den hohen Stellkräften, die nötig sind, um den beweglichen Gehäuseteil anzuheben und dem großen Stellweg, der erforderlich ist, um den Rundballen aus dem Pressraum auswerfen zu können.

Der Prospekt VERMEER 504 HE ohne Druckvermerk zeigt eine Rundballenpresse, bei der sich der Schwenkpunkt eines außerhalb des Ballenpressraums verlaufenden Trägers nahezu im Zentrumsbereich des Ballenpressraums befindet. An dem äußeren Endbereich des Trägers ist ein Arm vorgesehen, auf dem sich mehrere Rollen befinden, über die Riemen verlaufen und die in den Ballenpressraum eintauchen können. In diesem Fall bildet die Spannvorrichtung mehrere Schlaufen, in denen sich Erntegut ansammeln kann.

Die nicht veröffentlichte europäische Patentanmeldung EP 1112927 offenbart eine Rundballenpresse mit festen Seitenwänden, außerhalb von denen Arme vertikal schwenkbar angebracht sind, an denen zwei voneinander beabstandete Rollen angebracht sind. Die Rollen bilden mit darüber verlaufenden Riemen zugleich den Boden des Pressraums und können entlang von Kanten zweier Seitenwände in eine angehobene Stellung gebracht werden, in der sich schnell eine ausreichend große Öffnung zum Boden ergibt, durch die der Rundballen austreten kann. Ein Spannarm ist im vorderen Bereich der Rundballenpresse vorgesehen und weist eine federbelastete Rolle auf, um die sich die Riemen in der Art einer Schlaufe erstrecken.

Aus der nicht veröffentlichten DE 101 53 540.6 ist eine Rundballenpresse bekannt, deren Pressmittel über ortsfeste Drehkörper und insbesondere in einem vertikal schwenkbaren Träger gehaltene Drehkörper bei festen Seitenwänden geführt sind. Der Träger ist Teil eines Auslasstores und weist einen Drehkörper auf, um den das Pressmittel eine Schlaufe bilden und beim Auswerfen des Ballens gehalten werden kann.

Das der Erfindung zugrunde liegende Problem besteht darin, eine einfache Betätigungsvorrichtung zum vertikalen Schwenken des Auslasstores anzugeben, die einen schnellen Auswurf des Rundballens erlaubt.

Diese Aufgabe wird erfindungsgemäß durch die Lehre des Patentanspruchs 1 gelöst, wobei in den weiteren Patentansprüchen Merkmale aufgeführt sind, die die Lösungen in vorteilhafter Weise weiterentwickeln.

Auf diese Weise tritt zu keinem Zeitpunkt während der Schwenkbewegung des Auslasstors eine unüberwindliche Totpunktstellung ein, in der das Auslasstor verharren müsste. Vielmehr ist eines der Lager stets so gelegen, dass es einen Hebelarm zu der Schwenkachse aufweist. Die tiefliegende Anordnung der Schwenkachse macht es möglich, die Seitenwände stationär zu belassen und nicht mit zu verschwenken, was die erforderlichen Kräfte reduziert.

Wenn zwei in einem Winkel zueinander versetzt angeordnete Betätigungsmittel, d.h. solchen, die nicht eine gemeinsame Wirklinie aufweisen, verwendet werden, ist es möglich, dass ein erstes der beiden Betätigungsmittel für einen ersten Schwenkbereich und ein zweites der beiden Betätigungsmittel für einen zweiten Schwenkbereich aktiv schaltbar ist. Damit ist eine weite Schwenkbewegung mit minimalem Kraftaufwand durchführbar. Bei der Steuerung kann zudem vorgesehen sein, dass das jeweils andere der beiden Betätigungsmittel unterstützend aktivierbar ist.

Eine andere Lösungsausführung besteht darin, dass zwei Lenker eines Gestänges, die gelenkig miteinander verbunden sind, von jeweils einem Betätigungsmittel beaufschlagt werden und zwischen einem ortsfesten Lager und dem Auslasstor wirken. Diese Lösung arbeitet mit einer Verkürzung oder Verlängerung des gesamten Gestänges, die beim exzentrischen Angriff an dem Auslasstor dessen Schwenkbewegung bewirkt. Die Betätigungsmittel werden dabei so gesteuert, dass die beteiligten Lager abwechselnd genutzt werden.

Die Möglichkeit, dass die Lager zweier Betätigungsmittel und das Lager des zu verstellenden Auslasstors auf einer Geraden zu liegen kommen und ohne seitliche Komponente keine Verstellung mehr ausüben können, wird vermieden, wenn die Wirklinien mehrerer Betätigungsmittel zueinander geneigt verlaufen.

In einer dritten Lösungsdurchführung weist das zweiteilige Gestänge zwei Lenker auf, die in einer ersten Endstellung einen geringen Winkel zueinander einnehmen. Bei Betätigung des Betätigungsmittels schwenkt der erste Lenker um ein Lager und nimmt dabei den zweiten Lenker mit, der direkt auf das Auslasstor einwirkt und dessen Schwenkbewegung fortführt. Für diese Lösung ist lediglich ein Betätigungsmittel erforderlich, das das Auslasstor über einen weiten Schwenkbereich schwenkt.

In vorteilhafter Weise sind sich seitlich gegenüberliegende Lenker mittels einer Spange oder dergleichen in der Art eines u-förmigen Bügels verwindungssteif verbunden, so dass ein Betätigungsmittel für die Träger auf beiden Seiten ausreicht, um eine Schwenkbewegung über einen zweiten Schwenkbereich durchzuführen.

Dadurch, dass einer der beiden Lenker zueinander geneigt verlaufende Schenkel aufweist und das Betätigungsmittel zwischen dem anderen Lenker und dem Endbereich des geneigt zu ihm verlaufenden Schenkels wirkt, ergibt sich stets ein Kräftedreieck, das Totpunkt- oder Blockadestellungen vermeidet.

Eine hohe Ballendichte wird erreicht, wenn das Auslasstor mittels einer Verriegelungsvorrichtung in der geschlossenen Stellung gehalten wird und somit hinzukommendes Gut die Dichte mehr und mehr erhöht. Die Fertigungskosten werden minimiert und der Ballenentladeprozess wird vereinfacht, wenn die Verriegelungsvorrichtung zugleich mit dem ohnehin vorhandenen Betätigungsmittel verstellt wird.

Das Gewicht der Rundballenpresse ist auf beiden Seiten im wesentlichen gleich, wenn bei zwei Betätigungsmitteln eines rechts und das andere links vorgesehen ist.

Die Verwendung doppeltwirkender Betätigungsmittel hat den Vorteil, dass auch die aufgrund der Schwerkraft abwärts gerichtete Bewegung des Auslasstors gesteuert werden kann. Außerdem kann im Fall des Vorhandenseins einer Verriegelungsvorrichtung diese nicht nur geöffnet, sondern auch aktiv geschlossen und gehalten werden.

In der Zeichnung sind nachfolgend näher beschriebene Ausführungsbeispiele der Erfindung dargestellt. Es zeigen
- Fig. 1: eine Rundballenpresse in einem leeren Betriebszustand in Seitenansicht und schematischer Darstellung,
- Fig. 2: die Rundballenpresse nach Figur 1 während des Entladevorgangs,nach einem ersten Ausführungsbeispiel mit einer Betätigungsvorrichtung mit zwei Betätigungsmitteln für ein Auslasstor,
- Fig. 3: die zwei Betätigungsmittel an dem sich in einer ersten Endstellung befindlichen Auslasstor in schematischer Darstellung,
- Fig. 4: die zwei Betätigungsmittel an dem sich in einer mittleren Position befindlichen Auslasstor,
- Fig. 5: die zwei Betätigungsmittel an dem sich in einer zweiten Endstellung befindlichen Auslasstor,
- Fig. 6: das Auslasstor und die beiden Betätigungsmittel in einer perspektivischen Ansicht,
- Fig. 7: eine Betätigungseinrichtung nach einem zweiten Ausführungsbeispiel mit einem zweiteiligen Gestänge und mit zwei Betätigungsmitteln für das sich in einer ersten Endstellung befindliche Auslasstor in schematischer Darstellung,
- Fig.8: die Betätigungseinrichtung nach Figur 7 mit dem zweiteiligen Gestänge und mit den Betätigungsmitteln für das sich in einer mittleren Position befindliche Auslasstor,
- Fig. 9: die Betätigungseinrichtung nach Figur 7 mit dem zweiteiligen Gestänge und mit den Betätigungsmitteln für das sich in. einer zweiten Endstellung befindliche Auslasstor,
- Fig. 10: die Betätigungseinrichtung nach Figur 7 mit dem zweiteiligen Gestänge und mit den Betätigungsmitteln für das sich einer ersten Endstellung befindliche Auslasstor in perspektivischer Ansicht,
- Fig. 11: eine Betätigungseinrichtung nach einem dritten Ausführungsbeispiel mit einem zweiteiligen Gestänge und mit einem Betätigungsmittel für das sich in einer ersten Endstellung befindliche Auslasstor in schematischer Darstellung,
- Fig. 12: die Betätigungseinrichtung nach Figur 11 mit dem zweiteiligen Gestänge und mit dem Betätigungsmittel für das sich in einer mittleren Stellung befindliche Auslasstor,
- Fig. 13: die Betätigungseinrichtung nach Figur 11 mit dem zweiteiligen Gestänge und mit dem Betätigungsmittel für das sich in einer zweiten Endstellung befindliche Auslasstor und
- Fig. 14: die Betätigungseinrichtung nach Figur 11 mit dem zweiteiligen Gestänge und mit dem Betätigungsmittel für das sich in der ersten Endstellung befindliche Auslasstor in perspektivischer Ansicht.

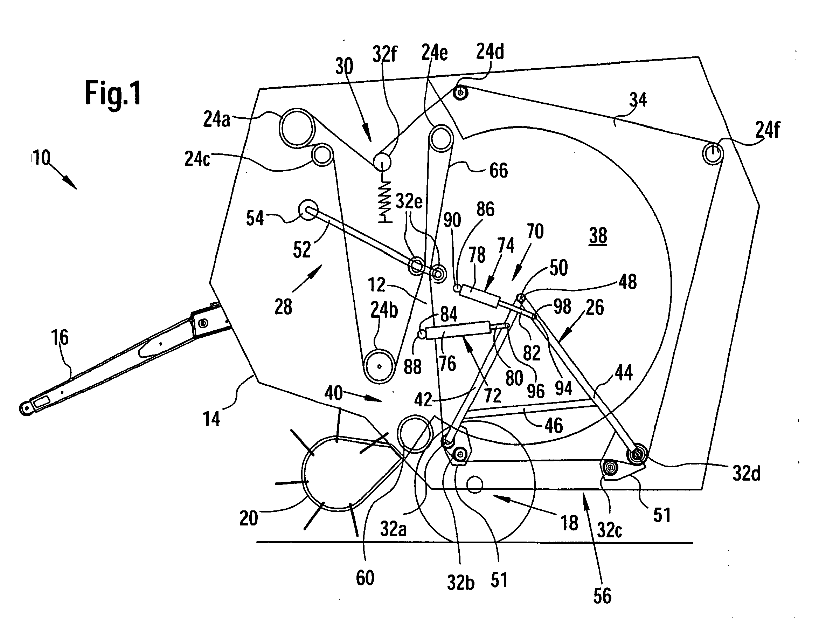

Figur 1 zeigt eine landwirtschaftliche Rundballenpresse 10 mit einem Ballenpressraum 12. Die Rundballenpresse 10 weist unter anderem folgende Komponenten auf: ein Fahrgestell 14, eine Deichsel 16, ein Fahrwerk 18, eine Aufnahmevorrichtung 20, feste Drehkörper 24, einen Träger 26, einen Spannmechanismus 28, einen zweiten Spannmechanismus 30, ortsbewegliche Drehkörper 32 und ein Pressmittel 34.

Die Rundballenpresse 10 dient der Aufnahme von Erntegut, wie Stroh und Heu, das spiralförmig zu einem rund-zylindrischen Ballen 36 auf sich aufgerollt und gebunden und anschließend auf den Boden abgelegt wird. Während der Ballen 36 aus dem Ballenpressraum 12 ausgeworfen wird, wird der Aufnahme- und Pressvorgang unterbrochen.

Der Ballenpressraum 12 ist in seiner Größe veränderlich, d. h. sein Durchmesser nimmt mit der Größe des Ballens 36 zu. Während der Ballenpressraum 12 umfangsseitig im wesentlichen von dem Pressmittel 34 umgeben wird, wird er seitlich von Seitenwänden 38 geschlossen. In einer nicht gezeigten Ausführung ist unterhalb des Ballenpressraums 12 ein zweites Pressmittel vorgesehen, auf dem der Ballen 36 ganz oder teilweise ruht.

Das Fahrgestell 14 ist in bekannter Weise als ein Schweißzusammenbau ausgebildet, der die Deichsel 16, das Fahrwerk 18, die Aufnahmevorrichtung 20, die ortsfesten Drehkörper 24, den Träger 26, den Spannmechanismus 28, den zweiten Spannmechanismus 30 und die Seitenwände 38 zusammenhält bzw. trägt. Hierzu sind auch nicht gezeigte Querstreben vorgesehen, die für einen steifen räumlichen Zusammenbau sorgen. Der Aufbau des Fahrgestells 14 an sich ist herkömmlicher Natur.

Die Deichsel 16 dient dem Anschluss des Fahrgestells 14 an ein nicht gezeigtes Zugfahrzeug, z. B. einen Ackerschlepper.

Das Fahrwerk 18 enthält jeweils nicht gesondert bezeichnet eine Achse und Räder, mit denen sich das Fahrgestell 14 auf dem Boden abstützt. Das Fahrwerk 18 ist fest und gegebenenfalls gefedert mit dem Fahrgestell 14 verbunden.

Die Aufnahmevorrichtung 20 ist in herkömmlicher Weise als eine sogenannte Pick-Up ausgebildet, die auf dem Boden liegendes Gut mit umlaufenden Zinken aufnimmt und es rückwärts in Richtung des Ballenpressraums 12 fördert. Es kann zusätzlich stromabwärts eine Schneidvorrichtung von ebenfalls bekannter Bauweise vorgesehen werden, die das Gut auf dem Weg zwischen der Aufnahmevorrichtung 20 und einem Einlass 40 in den Ballenpressraum 12 zerkleinert.

Die ortsfesten Drehkörper 24 sind als Rollen oder Walzen aus Stahl und erforderlichenfalls beschichtet mit Kunststoff ausgebildet. Die Drehkörper 24 sind entweder auf einer Achse drehbar gelagert oder weisen Wellenstummel auf, die in Lagern in dem Fahrgestell 14 drehbar aufgenommen werden. Die Drehkörper 24 sind von unterschiedlichem Durchmesser und weisen gegebenenfalls Leitmittel wie Stege, Erhebungen und dergleichen für das Pressmittel 34 auf. In diesem speziellen Ausführungsbeispiel sind insgesamt sechs ortsfeste Drehkörper 24 vorgesehen, nämlich vorne oben, vorne unten, vorne mitte, mitte oben, mitte unten und hinten, die im einzelnen mit 24a bis 24f bezeichnet werden. Die Drehkörper 24 erstrecken sich mindestens über die gesamte Breite des Ballenpressraums 12 und gegebenenfalls darüber hinaus. Wenigstens einer der Drehkörper 24 ist antreibbar. Alle ortsfesten Drehkörper 24 - außer dem vorne unten - liegen nahe einer im wesentlichen horizontalen Ebene oberhalb des Ballenpressraums 12. Der hintere Drehkörper 24f befindet sich in einem oberen rückwärtigen Eckbereich des Fahrgestells 14 und ist ungefähr gleich weit von den Drehkörpern 32c, 32d entfernt, wenn sich der Träger 26 in einer seiner Endstellungen befindet.

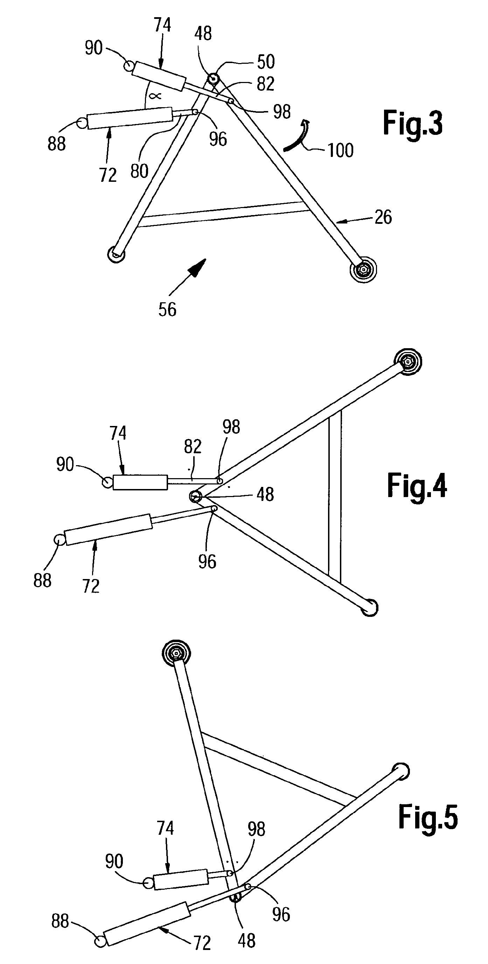

Der Träger 26 ist im Wesentlichen in der Form eines Dreiecks mit einem ersten und einem zweiten Schenkel 42 und 44 ausgebildet, die mittels einer Spange 46 starr verbunden werden. Der erste und der zweite Schenkel 42 und 44 verlaufen divergierend zueinander, treffen sich jedoch in einem Lager 48, das auf einem Lagerteil 50 an der Außenseite der Seitenwand 38 aufgenommen wird. Der Lagerteil 50 befindet sich direkt im oder nahe zum Zentrum des Ballenpressraums 12 bzw. der Seitenwand 38. Jedenfalls befindet sich die Schwenkachse des Lagerteils 50 innerhalb der vertikalen Erstreckung der Seitenwände 38. Auf jeder Seite der Rundballenpresse 10 ist ein Träger 26 und ein Lagerteil 50 vorgesehen, und zwar jeweils an der Außenseite der Seitenwand 38. Am radial außenliegenden Endbereich des ersten Schenkels 42 ist ein erster und ein zweiter beweglicher Drehkörper 32a, 32b und an dem radial außenliegenden Endbereich des zweiten Schenkels 44 ist ein erster und ein zweiter beweglicher Drehkörper 32c, 32d vorgesehen, die jeweils frei drehbar von dem Träger 26 aufgenommen werden. Die ersten und die zweiten Drehkörper 32a bis 32d verlaufen parallelachsig und jeweils mit geringem Abstand zueinander. Der erste Drehkörper 32a ist direkt an dem vorderen Schenkel 42 und der zweite Drehkörper 32d ist direkt an dem zweiten Schenkel 44 angebracht, während der jeweils dazugehörige Drehkörper 32b und 32c an einem von dem jeweiligen Schenkel 42, 44 abstehenden Arm 51 angebracht ist. Der zweite Drehkörper 32b des ersten Schenkels 42 befindet sich radial weiter außen als der erste 32a. Der Träger 26 kann zwischen zwei Endstellungen schwenken, nämlich einer unteren, in der sich die Drehkörper 32a bis 32d im wesentlichen nahe einer horizontalen Ebene unterhalb des Ballenpressraums 12 befinden, und einer um nahezu 180 Grad nach oben versetzten Stellung, in der die Drehkörper 32c, 32d des zweiten Schenkels 44 zwischen dem mitte oberen und dem hinteren ortsfesten Drehkörper 24d und 24f zu liegen kommen - sh. Figur 4. Die Drehkörper 32a bis 32d sind den Drehkörpern 24 vergleichbar ausgebildet und erstrecken sich ebenfalls mindestens über die Breite des Ballenpressraums 12. Die maximale radiale Erstreckung des Trägers 26 ausgehend von dem Lagerteil 50 ist geringer als der Abstand zwischen dem Lagerteil 50 und der hinteren ortsfesten Rolle 24f. Der Träger 26 kann anstatt als Fachwerk auch flächig ausgebildet sein und somit gleichzeitig die Seitenwand 38 bilden. Der auf beiden Seiten der RundbaLlenpresse 10 angeordnete Träger 26, die Drehkörper 32a, b, c und d, sowie die zwischen den Drehkörpern 32a und 32d angeordnete Trume des Pressmittels 34 bilden ein Auslasstor 56, das angehoben werden kann, um einen gebildeten Ballen 36 aus dem Ballenpressraum 12 auswerfen und auf den Boden ablegen zu können.

Der Spannmechanismus 28 enthält einen Spannarm 52, zwei bewegliche, beabstandete Drehkörper 32e und ein nicht gezeigtes Spannelement. Der Spannarm 52 und das Spannelement befinden sich jeweils einmal auf jeder Seite der Rundballenpresse 10. Bei diesem Ausführungsbeispiel ist jeder Spannarm 52 im Bereich zwischen dem ortsfesten Drehkörper 24b vorne unten und dem ortsfesten Drehkörper 24c vorne mitte vertikal schwenkbar in einem Lager 54 gelagert und erstreckt sich vertikal bis unter den mitte unteren Drehkörper 24e. Die Drehkörper 32e befinden sich an dem radial außenliegenden Endbereich des Spannarms 52. Das Spannelement ist in üblicher Weise als eine mechanische Feder oder als ein Hydraulikmotor ausgebildet, der gegen einen evtl. veränderbaren Widerstand bewegbar ist. Ein solcher Widerstand kann mittels einer vorzugsweise verstellbaren Drossel in einem Hydraulikkreis aufgebaut werden, wie dies an sich bekannt ist. Das Maß des Widerstands bestimmt zugleich die Dichte und das maximale Gewicht des Ballens 36. Der Spannarm 52 ist so ausgebildet oder angeordnet, dass er nicht mit dem Träger 26 kollidiert. Vorzugsweise sind die Spannarme 52 im Bereich der Drehkörper 32e verwindungssteif miteinander verbunden und schwenken gemeinsam wie ein auf dem Kopf stehendes "U".

Der zweite Spannmechanismus 30 ist mehr symbolisch als strukturell dargestellt und enthält einen federbelasteten Drehkörper 32f, der das Pressmittel 34 stets zusätzlich zu dem Spannmechanismus 28 gespannt hält und einer Steuerung nicht unbedingt bedarf.

Die Drehkörper 32, im einzelnen 32a - 32f, sind ortsbeweglich, wobei ihre Lage von der Spannung in dem Pressmittel 34 und der Stellung des Trägers 26 abhängt. Die auf dem Träger 26 gelagerten Drehkörper 32a bis 32d erstrecken sich wenigstens vollkommen über den Ballenpressraum 12, so dass sie auf der Außenkante des rückwärtigen Teils der Seitenwände 38 oder mit Abstand zu dieser bewegt werden können.

Das Pressmittel 34 setzt sich in diesem Ausführungsbeispiel aus einer Vielzahl parallel zueinander verlaufender, schmaler, flacher, flexibler und endlos ausgebildeter Riemen zusammen, wie dies an sich bekannt ist. Dieses Pressmittel 34 verläuft unter anderem über die ortsfesten und die beweglichen Drehkörper 32 und wird mittels des Spannmechanismus 28 und des zweiten Spannmechanismus 30 stets so fest an dem wenigstens einen drehbar angetriebenen ortsfesten Drehkörper 24 angelegt, dass seine Mitnahme gewährleistet ist. Wie die Darstellung der Figuren 1 und 3 zeigt, kann das Pressmittel 34 einen Anfangszustand einnehmen, in dem es an dem Einlass 40 einen sich hauptsächlich vertikal erstreckenden dreieckigen Ballenpressraum 12 bildet, und einen Endzustand, in dem es sich wie eine große Schlaufe um den Ballen 36 schlingt. Der Lauf des Pressmittels 34 ist bei einem leeren Ballenpressraum 12 ausgehend von dem rückwärtigen Drehkörper 24c und im Uhrzeigerdrehsinn gesehen der folgende: über den ortsfesten Drehkörper 24f, unter den Drehkörper 32d, über den Drehkörper 32c, unter den Drehkörpern 32b und 32a, zwischen den Drehkörpern 32e hindurch, oben über den mittleren unteren ortsfesten Drehkörper 24e, zwischen den Drehkörpern 32e zurück, unter den vorderen unteren ortsfesten Drehkörper 24b, über den vorderen mittleren ortsfesten Drehkörper 24c und um diesen herum, über und um ca. 240 Grad herum um den vorderen oberen Drehkörper 24a, unter den Drehkörper 32f des zweigen Spannmechanismus 30, über den mitte oberen ortsfesten Drehkörper 24d zurück zu dem rückwärtigen ortsfesten Drehkörper 24f - sh. Figur 1.

Der Ballen 36 befindet sich während seiner Bildung in dem Ballenpressraum 12 und wird von dem Pressmittel 34 größtenteils umschlungen, fällt aber aus dem Ballenpressraum 12, d. h. dem Raum zwischen den Seitenwänden 38, auf den Boden, sobald - wie später beschrieben wird - der Träger 26 mit den beweglichen Drehkörpern 32 mit Blick auf die Zeichnung entgegen dem Uhrzeigerdrehsinn nach oben schwenkt.

Die Seitenwände 38 entsprechen in ihrer Größe und Form wenigstens im rückwärtigen Bereich im wesentlichen den Stirnflächen eines fertigen Ballens 36 in seiner größten Ausführung. Die Seitenwände 38 sind von dem Fahrgestell 14 getrennt ausgebildet, wobei das Fahrgestell 14 eigene Seitenwände aufweisen kann, die hauptsächlich die Funktion von Schützen aufweisen. Anders als bei einem großen Teil des Standes der Technik erstrecken sich die Seitenwände 38 einteilig über die gesamte Stirnfläche des Ballenpressraums 12. Selbstverständlich können z. B. aus Fertigungsgründen mehrere Teile zusammengefasst werden, um eine einteilige Seitenwand 38 zu erzeugen. Die Seitenwände 38 sind vorzugsweise aus Stahlblech gebildet, verlaufen evtl. leicht divergierend nach hinten und sind an geeigneten Stellen versteift. Die Seitenwände 38 können zudem quer zur Fahrtrichtung begrenzt beweglich gelagert sein, damit sie beim Auswerfen des Ballens 36 dessen Anlagekraft an ihrer Innenseite reduzieren, so dass dieser leichter und somit schneller austritt. Es würde z. B. bereits ausreichen, wenn die Seitenwände 38 um wenige Zentimeter voneinander entfernt würden. Dieses Merkmal kann für sich alleine ausgeführt werden und stellt eine Innovation für sich dar. Die Seitenwände 38 können mit den Trägern 26 beweglich ausgebildet werden.

Der Einlass 40 wird öben von dem vorderen unteren Drehkörper 24b mit dem darüber verlaufenden Pressmittel 34 und unten von einer Rolle 60 begrenzt. Allerdings könnte die untere Begrenzung auch von dem Drehkörper 32a gebildet werden. Der Einlass 40 stellt im wesentlichen die Stelle dar, an der der Ballen 36 nicht von dem Pressmittel 34 umgeben ist.

Die vorzugsweise angetriebene Rolle 60 ist stromabwärts der Aufnahmevorrichtung 20 und an diese angrenzend vorgesehen. Vorzugsweise ist die Rolle 60 auf ihrer Umfangsfläche mit nicht näher bezeichneten Mitnehmern versehen, die einen sicheren Transport des Ernteguts zwischen der Aufnahmevorrichtung 20 und dem Ballenpressraum 12 gewährleisten. Diese Rolle 60 bildet die dem vorderen unteren Drehkörper 24b gegenüberliegende, untere Begrenzung des Einlasses 40 und befindet sich in unmittelbarer Nachbarschaft zu dem ersten, vorderen Drehkörper 32a an dem ersten Schenkel 42, wenn sich der Träger 26 in seiner unteren, vorderen Endstellung befindet.

Nach alledem gibt sich folgender Aufbau und Funktion der Rundballenpresse 10 aus der vorherigen Beschreibung.

Solange der Rundballenpresse 10 kein Gut zugeführt wird und der Ballenpressraum 12 leer ist, befindet sich der Träger 26 in seiner unteren, vorderen Endstellung, in der sich der erste, vordere Drehkörper 32a an dem ersten Schenkel 42 nahe der Rolle 60 befindet und sich die Drehkörper 32a - 32d nahe einer im wesentlichen horizontalen Ebene befinden. Der Spannarm 52 wird hinten nach unten gedrängt, sodass er eine unter ca. 30 Grad verlaufende Neigung zur Horizontalen einnimmt und sich seine Drehkörper 32e nahe dem vorderen unteren ortsfesten Drehkörper 24b befinden. Das Pressmittel 34 bildet zwischen den beweglichen Drehkörpern 32e am Ende des Spannarms 52 und dem dazwischenliegenden mittleren unteren Drehkörper 24e eine Schlaufe 66. Schließlich erstreckt sich ein Abschnitt des Pressmittels 34 über die Innenseite der Rolle 60 und dem rückwärtigen Drehkörper 32e auf dem Spannarm 52 und somit dem Einlass 40 gegenüber. Dieser Zustand entspricht dem in Figur 1 gezeigten.

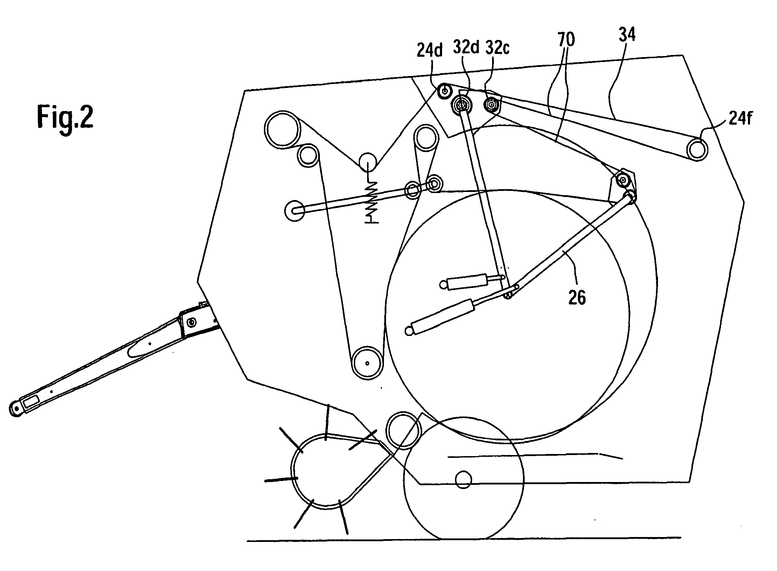

Sobald über die Aufnahmevorrichtung 20 Erntegut zu dem Ballenpressraum 12 gefördert wird, wird es den Abschnitt des Pressmittels 34 gegenüber dem Einlass 40 zu dem Innern des Ballenpressraums 12 hin auslenken, was bewirkt, dass der Spannarm 52 anfängt, sich nach oben zu bewegen, um die zunächst große Schlaufe 66 zu verkürzen. Mit zunehmendem Durchmesser bewegt sich der Spannarm 52 weiter nach oben, bis er schließlich seine in Figur 2 gezeigte Stellung einnimmt. Während der Ballendurchmesser zunimmt, bleibt der Träger 26 in seiner in Figuren 1 gezeigten Stellung.

Wenn der Ballen 36 seinen größten Durchmesser erreicht hat - sh. Figur 2 - ruht der Ballen 36 vorne auf der Rolle 60 und dem angrenzenden ersten Drehkörper 32a. Im übrigen wird der Ballen 36 von der Spannung in dem Pressmittel 34 außer Kontakt mit dem ersten und dem zweiten Drehkörper 32c, 32d und den über sie verlaufenden Riemenabschnitten gehalten. Bei Bedarf kann zwischen den beiden zweiten Schenkeln 44 eine weitere nicht gezeigte Rolle vorgesehen werden, auf der sich der Ballen 36 abstützt. Aufgrund des radialen Versatzes des ersten und des zweiten Drehkörpers 32a und 32b an dem ersten Schenkel 42 werden die einander benachbarten Trume des Pressmittels 34 außer Eingriff gehalten werden. In diesem Zustand kann der Ballen 36 gebunden oder mit Folie oder Netz umwickelt werden, Sodass er nach dem Austritt aus dem Ballenpressraum 12 nicht auseinander fällt.

Nachdem der Ballen 36 vollkommen gebildet ist, kann er aus dem Ballenpressraum 12 ausgeworfen werden, wozu der Träger 26 entgegen dem Uhrzeigerdrehsinn nach hinten und oben geschwenkt wird. Insbesondere aufgrund der Anlenkung des Trägers 26 im oder nahe dem Zentrum der Seitenwände 38 wird der Ballen 36 bereits nach einem kurzen Schwenkweg des Trägers 26 von z. B. ca. 90 Grad auf den Boden fallen. Nach einem Schwenkweg von z.B. ca. 180 Grad befindet sich der erste Drehkörper 32a an dem ersten Schenkel 42 soweit über dem Boden, dass die Rundballenpresse 10 weiter nach vorne gefahren werden kann, ohne an den Ballen 36 anzustoßen. Wenn sich der Träger 26 in seiner oberen Endlage befindet, bildet das Pressmittel 34 eine zweite Schlaufe 68 um den Drehkörper 32c, sodass der zuvor um den Ballen 36 geschlungene Abschnitt des Pressmittels 34 von dieser zweiten Schlaufe 68 aufgenommen und das Pressmittel 34 gespannt gehalten wird. In dieser Situation befinden sich der erste und der zweite Drehkörper 32a, 32b zwischen dem mittig oben liegenden Drehkörper 24d und dem rückwärtigen Drehkörper 24f.

Sobald der Ballen 36 aus dem Ballenpressraum 12 herausgerollt ist, wird der Träger 26 wieder nach unten in die in Figur 1 gezeigte Stellung geschwenkt. Auf diesem Weg wird das Pressmittel 34 wieder gespannt und somit der Spannarm 52 wieder nach unten bewegt.

Anstelle der soweit beschriebenen Rundballenpresse 10 mit einem in seiner Größe veränderlichen Ballenpressraum 12 kann auch eine herkömmliche Rundballenpresse mit einem in seiner Größe nicht veränderbaren Ballenpressraum und mit diesen umgebenden Walzen oder dergleichen Presselemente verwendet werden, bei der der Träger 26 relativ tief, d. h. innerhalb der vertikalen Erstreckung der Seitenwände 38 schwenkbar angebracht ist. Allerdings stellen später beschriebene Betätigungsvorrichtungen mit der soweit beschriebenen Rundballenpresse 10 eine besonders vorteilhafte Kombination dar.

Die Figuren 1 und 2 zeigen den Träger 26 des Auslasstores 56 mit einer Betätigungsvorrichtung 70, die zwei in diesem Fall hydraulische Betätigungsmittel 72 und 74 aufweist. Die hydraulischen Betätigungsmittel 72 und 74 weisen jeweils einen Zylinder 76 und 78 und jeweils einen Kolben 80 und 82 auf, die über nicht dargestellte Hydraulikverbindungen betätigbar sind. Die Betätigungsmittel 72 und 74 sind mit Endbereichen 84 und 86 der Zylinder 76 und 78 schwenkbeweglich an Lagern 88 und 90 des Fahrgestells 14 oder der Seitenwände 38 der Rundballenpresse 10 befestigt. Diesen gegenüberliegende Endbereiche 92 und 94 der Kolben 80 und 82 sind schwenkbeweglich an Lagern 96 und 98 der Schenkel 42 und 44 befestigt. Es würde ausreichen, die Betätigungsmittel 72 und 74 an nur einem Schenkel 42 oder 44 oder an einer Strebe dazwischen angreifen zu lassen.

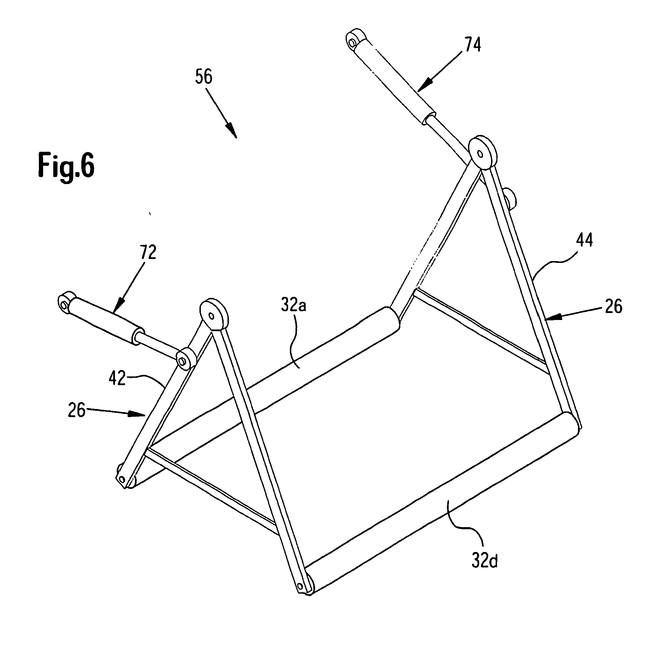

Das Zusammenwirken der hydraulischen Betätigungsmittel 72 und 74 mit dem Träger 26 soll nunmehr anhand der nachfolgenden Figuren 6 bis 9 näher erläutert werden. Die Betätigungsmittel 72 und 74 könnten auch als elektrische Stellmotoren ausgebildet werden. Eine einfachwirkende Bauweise reicht aus; allerdings kann mittels einer doppeltwirkenden Ausbildung der Betätigungsmittel 72, 74 eine Unterstützung des jeweils anderen Betätigungsmittels 72, 74 erfolgen, wodurch eine schnellere Verstellung möglich wird und/oder geringere Kräfte aufgebracht werden müssen. Während das Lager 88 des unteren Betätigungsmittels 72 unterhalb des Lagers 48 vorgesehen ist, befindet sich das des oberen Betätigungsmittels 74 geringfügig oberhalb des Lagers 48. In der in Figur 5 gezeigten Stellung verlaufen beide Wirklinien unterhalb des Lagers 48. Wenn hier von einem Lager 48 die Rede ist, so ist damit eigentlich die Lagerachse, d. h. die Schwenkachse des Trägers 26 auf dieser gemeint.

Figur 3 zeigt den Träger 26 und die hydraulischen Betätigungsmittel 72 und 74 herausgelöst aus der Rundballenpresse 10 in einer ersten, unteren Endstellung. Die Betätigungsmittel 72 und 74 weisen in dieser ersten Endstellung einen Winkel a zueinander und somit keine gemeinsame Wirklinie auf. Fährt das erste Betätigungsmittel 72 seinen Kolben 80 aus, so wird der Träger 26 gezwungen, in Pfeilrichtung 100, d.h. mit Blick auf die Zeichnung entgegen dem Uhrzeigerdrehsinn, um das Lager 48 zu schwenken. Während dieses Vorgangs ist der Kolben 82 des Betätigungsmittels 74 bei einfach wirkender Ausführung frei bewegbar und wird anfangs ausgezogen und anschließend eingefahren.

Figur 4 zeigt den Träger 26, der aufgrund des ausgefahrenen Kolbens 80 eine mittlere Position erreicht hat. In dieser Stellung befindet sich die Wirklinie des oberen Betätigungsmittels 74 oberhalb des Lagers 48 und dessen Schwenkachse, und die Wirklinie des unteren Betätigungsmittels 72 befindet sich darunter; die Betätigungsmittel 72, 74 können somit auf beiden Seiten des Lagers 48 wirken. Auf dem Weg dorthin hat das obere Betätigungsmittel 74 seine längste Erstreckung eingenommen, die es erreicht, wenn seine Lager 90 und 98 und auch die Mittenachse des Lagers 48 auf einer Geraden liegen. Nunmehr wird das zweite Betätigungsmittel 74 aktiviert und der Kolben 82 eingezogen. Der Träger 26 wird damit gezwungen, weiter in Pfeilrichtung 100 in eine zweite, obere Endstellung zu schwenken. Während des Schwenkvorgangs wird nunmehr das erste Betätigungsmittel 72 bei einfachwirkender Ausführung drucklos geschaltet. Beide Betätigungsmittel 72, 74 können solange aktiv sein, und zwar bei einfachwirkender Ausbildung nur in einer Richtung und bei doppeltwirkender Ausführung in beiden Richtungen, als sie einen seitlichen Abstand zu der Schwenkachse des Lagers 48 einhalten und diese nicht schneiden.

Figur 5 zeigt die obere Endstellung des Trägers 26. In dieser Endstellung kann der Ballen 36 sicher aus der Rundballenpresse 10 herausfallen. Zwischen unterer und oberer Endstellung liegt ein Winkel von cirka 190°. Von der oberen Endstellung in die untere, ruhende Endstellung gelangt der Träger 26 durch ein Zurückschwenken, wobei die Betätigungsmittel 72 und 74 zumindest anfänglich in umgekehrter Reihenfolge und Weise zusammenwirken, während der restliche Weg aufgrund der Schwerkraft überwunden wird. Wenn allerdings eine kontrollierte Bewegung des Trägers 26 erfolgen soll, sind die Betätigungsmittel 72, 74 zu steuern bzw. zu regeln.

Figur 6 zeigt, dass auf jeder Seite der Rundballenpresse 10 ein Träger 26 vorgesehen ist und zwar jeweils an der Außenseite der Seitenwand 38. Die beiden Betätigungsmittel 72 und 74 sind anders als in den Figuren 3 bis 5 verteilt an jeweils einem Schenkel 42, 44 auf beiden Seiten angeordnet. Die beiden Träger 26 und die Drehkörper 32a und 32d bilden das Auslasstor 56.

In anderen nicht dargestellten Varianten ist vorgesehen, dass die beiden Betätigungsmittel 72 und 74 an nur einem Träger 26 oder insgesamt vier Betätigungsmittel 72 und 74 jeweils einer an jedem Schenkel 42 und 44 angeordnet sind.

Die Ausführungsform nach den Figuren 1 bis 6 basiert auf dem Prinzip, dass zwei Betätigungsmittel 72, 74 derart angeordnet sind, dass eines davon dann wirken kann, wenn das andere eine Totpunktlage erreicht, in der sich die Schwenkachse des zu schwenkenden Trägers 26 auf der Wirklinie des Betätigungsmittels 72, 74 befindet.

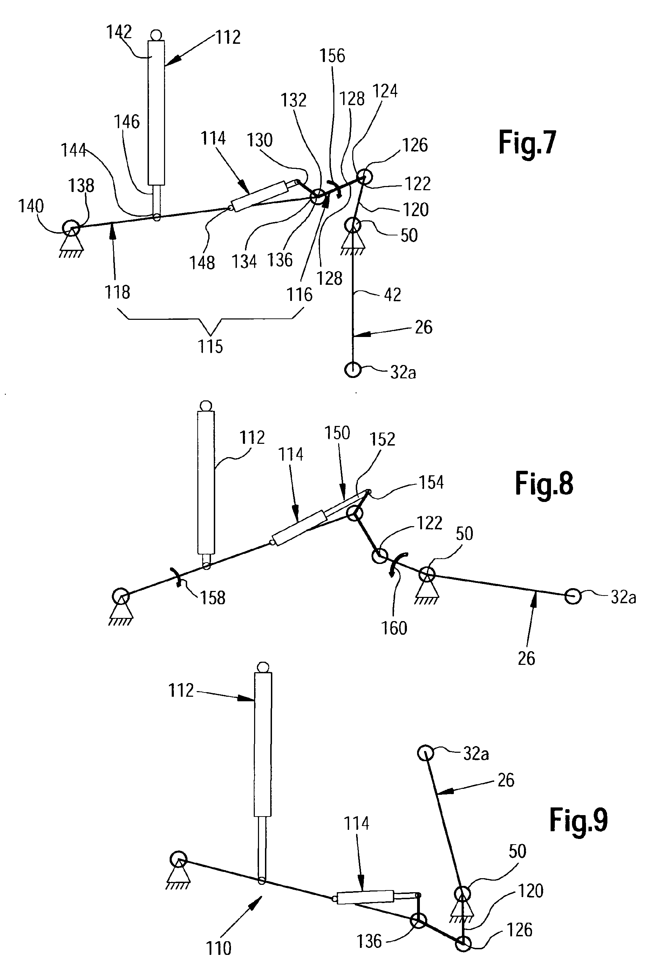

Die Darstellungen nach den Figuren 7 bis 14 sind nur schematischer Natur und weichen daher in den Abmessungen und Proportionen von der in die Rundballenpresse nach Figur 1 und 2 integrierten Darstellung ab.

Figuren 7 bis 10 zeigen eine Betätigungsvorrichtung 110 nach einem zweiten Ausführungsbeispiel mit zwei Betätigungsmitteln 112 und 114 und einem zweiteiligen Gestänge 115 mit einem ersten Lenker 116 und einem zweiten Lenker 118 für den Träger 26, der hier der Einfachheit halber mit nur einem Schenkel 42 dargestellt ist. Der Träger 26 schwenkt um das Lager 48 und weist eine Verlängerung 120 im wesentlichen in Richtung seines Schenkels 42 über das Lager 48 hinaus auf. An einem dem Schenkel 42 abgewandten Endbereich 122 der Verlängerung 120 ist die Verlängerung 120 an einem Endbereich 124 des ersten Lenkers 116 befestigt. Die Endbereiche 122 und 124 sind über ein Lager 126 schwenkbeweglich miteinander verbunden. Der ersten Lenker 116 weist zwei Schenkel 128 und 130 auf, die einen Winkel von 130 Grad zueinander einnehmen und in deren Knick 132 der zweite Lenker 118 mit einem ersten Endbereich 134 befestigt ist. Der Endbereich 134 und der Knick 132 sind über ein Lager 136 schwenkbeweglich miteinander verbunden. Ein zweiter Endbereich 138 des zweiten Lenkers 118 ist über ein Lager 140 schwenkbeweglich an der Seitenwand 38 oder dem Fahrgestell 14 befestigt. Das Betätigungsmittel 112 ist mit einem Endbereich 142 schwenkbeweglich an der Seitenwand 38 der Rundballenpresse 10 oder deren Fahrgestell 14 befestigt und greift mit einem zweiten Endbereich 144 eines axial beweglichen Kolbens 146 in etwa mittig an dem zweiten Lenker 118 an. Das zweite Betätigungsmittel 114 greift mit einem ersten Endbereich 148 ebenfalls in etwa mittig an dem zweiten Lenker 118 an und ist des weiteren mit seinem zweiten Endbereich 150, dem des Kolbens 152 mit einem Endbereich 154 des abstehenden Schenkels 130 des ersten Lenkers 116 verbunden. Die Betätigungsmittel 112, 114, die Lenker 116, 118 und der Schenkel 42 erstrecken sich jeweils im wesentlichen in einer aufrechten Ebene, und die Schwenkachsen der Lager 140, 136 126 und 48 verlaufen zumindest im wesentlichen zueinander parallel.

Zum Verschwenken des Trägers 26 aus einer unteren Endstellung in eine obere wird der Kolben 152 ausgefahren und der erste Lenker 116 um das Lager 136 mit Blick auf die Zeichnung nach unten, d. h. im Uhrzeigerdrehsinn verschwenkt. Der zunächst in etwa parallel zu dem zweiten Lenker 118 verlaufende Schenkel 128 des ersten Lenkers 116 schwenkt in Richtung 156, d.h. im Uhrzeigerdrehsinn um das Lager 136. Diese Drehung erfolgt in etwa bis zu einem rechten Winkel zwischen dem Schenkel 128 und dem zweiten Lenker 118. Das Betätigungsmittel 112 verharrt bei diesem Vorgang zunächst in seiner Lage. Dieser Bewegungsablauf bewirkt, dass der Schenkel 42 bzw. der Träger 26 um das Lager 48 bzw. dessen Schwenkachse entgegen dem Uhrzeigerdrehsinn schwenkt, bis er sich ungefähr mittig zwischen seinen Endstellungen befindet - sh. Figur 8.

Figur 8 zeigt den Träger 26 um cirka 90 Grad nach hinten und oben geschwenkt. Nunmehr wird das Betätigungsmittel 114 starr geschaltet und der Kolben 146 des Betätigungsmittels 112 ausgefahren. Dabei wird der zweite Lenker 118 in Richtung 158, d.h. im Uhrzeigerdrehsinn, verschwenkt, der zweite Lenker 116 in diese Richtung 158 - aufgrund seiner andersartigen Anlenkung jedoch entgegen dem Uhrzeigerdrehsinn - mitgenommen und dabei der Endbereich 122 der Verlängerung 120 des Trägers 26 um das Lager 48 in Richtung 160 gedrückt. Schließlich wird auch das Betätigungsmittel 114 wieder eingefahren, so dass der erste Schenkel 128 des ersten Lenkers 116 nahezu in der gleichen Richtung verläuft wie der zweite Lenker 118. Der Träger 26 wird dabei entgegen dem Uhrzeigerdrehsinn nach oben geschwenkt und nimmt eine zweite, obere Endstellung ein, die um cirka 190 bis 200 Grad versetzt zu der ersten Endstellung liegt. Selbstverständlich müssen die Betätigungsmittel 112, 114 nicht nacheinander betätigt werden; sie können vielmehr auch gleichzeitig betrieben werden, wobei als Ziel eine möglichst gleichförmige und keine ruckhafte Bewegung des Trägers 26 erreicht werden sollte. Diese gleichzeitige Bewegung kann insbesondere mittels einer nicht gezeigten rechnergestützten Steuer- oder Regelvorrichtung erreicht werden, die auf ebenfalls nicht gezeigte Hydraulikventile zum Beaufschlagen der Betätigungsmittel 112, 114 wirkt.

Figur 9 zeigt die um ca. 200° versetzte zweite Endstellung des Trägers 26. Von der oberen Endstellung gelangt der Träger 26 in die erste, untere Endstellung durch ein Zurückschwenken, wobei die Betätigungsmittel 112 und 114 in umgekehrter Reihenfolge und Weise zusammenwirken. Auch in diesem Fall bewegt die Schwerkraft den Träger 26 nach unten, wobei die Betätigungsmittel 112, 114 diese Abwärtsbewegung steuern können.

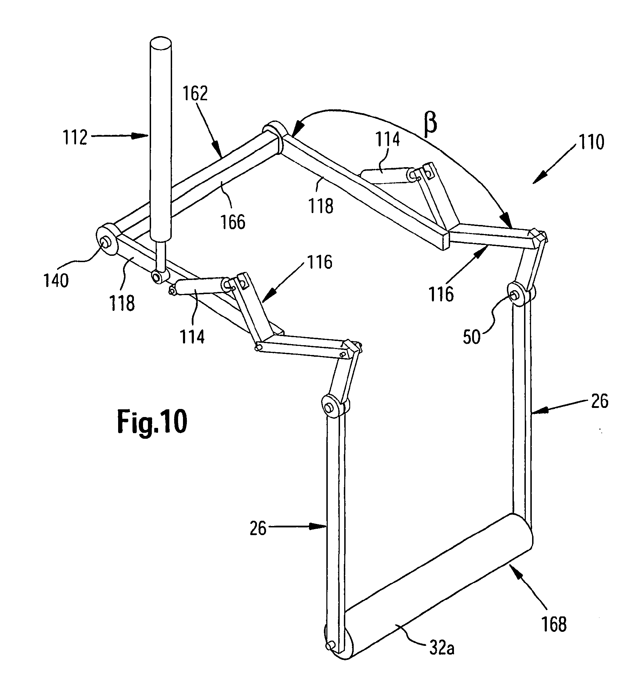

Figur 10 zeigt die gesamte Betätigungsvorrichtung 110 mit dem zweiten Lenker 118, der Teil eines u-förmigen Bügels 162 mit einem zweiten zweiten Lenker 118 und einer Spange 166 ist. Der u-förmige Bügel 162 umgreift das Fahrgestell 14 so, dass die Lenker 118 und die Spange 166 auf bzw. an den Außenseiten der beiden Seitenwände 38 angeordnet sind. Der Träger 26 ist Teil des Auslasstores 56, das den zweiten Träger 26 und zwischen den beiden Trägern 26 den Drehkörper 32a aufweist. Die beiden Träger 26, der Drehkörper 32a , der u-förmige Bügel 162, die zweiten Lenker 118 und die zwei Betätigungsmittel 112 und 114 weisen eine symmetrische Anordnung zu der vertikalen Längsmittenebene der Rundballenpresse 10 auf.

Sofern die Spange 166 steif genug ausgeführt ist, genügt ein Betätigungsmittel 112 an einem der Lenker 118. Der zweite Lenker 118 und der erste Lenker 116 weisen bei diesem Betriebszustand einen Winkel β von cirka 178° zueinander auf, so dass sie in der ersten Endstellung eine im Wesentlichen gestreckte Position einnehmen.

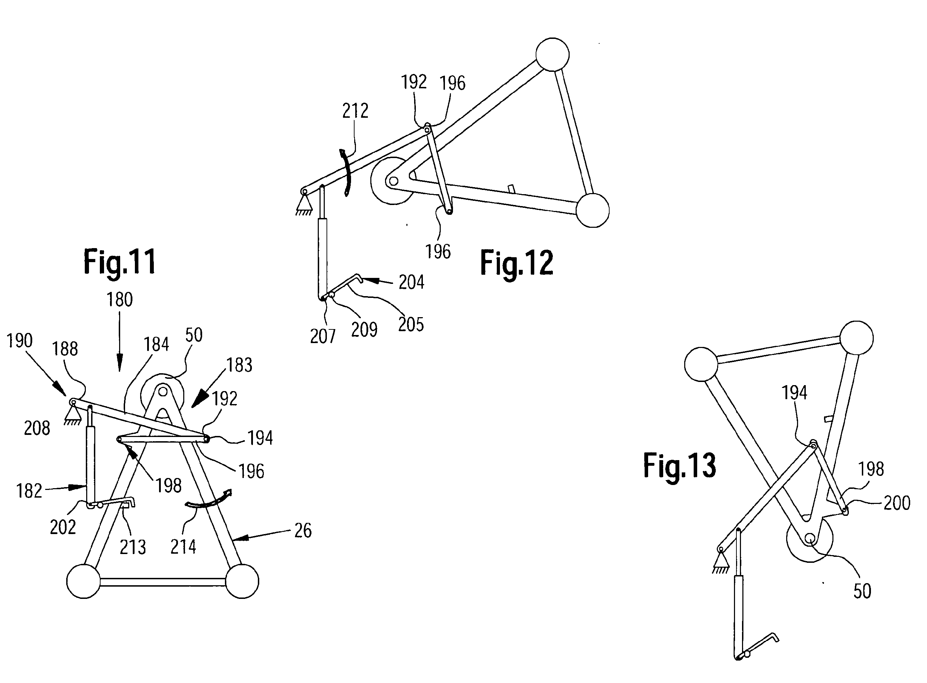

Figuren 11 bis 14 zeigen eine Betätigungsvorrichtung 180 nach einem dritten Ausführungsbeispiel mit einem Betätigungsmittel 182 und einem zweiteiligen Gestänge 183 mit einem ersten Lenker 184 und einem zweiten Lenker 186. Der erste Lenker 184 ist an einem Endbereich 188 (in Figur 11, links) über ein Lager 190 schwenkbeweglich an der Seitenwand 38 oder dem Fahrgestell 14 und mit einem zweiten Endbereich 192 über ein Lager 194 schwenkbeweglich an einem ersten Endbereich 196 des zweiten Lenkers 186 befestigt. Ein zweiter Endbereich 198 des Lenkers 186 ist schwenkbeweglich an einem Lager 200 befestigt. Das Lager 200 ist Teil des Trägers 26 bzw. an diesem angebracht. Die Anordnung der Lenker 184, 186 ist so getroffen, dass in einer unteren Endstellung des Trägers 26 die beiden Lager 194, 200 in der aufrechten Richtung die Schwenkachse des Lagers 48 zwischen sich aufnehmen und sich die beiden Lenker 184, 186 überlappen. Auf diese Weise bildet der Abstand jeweils eines der Lager 194, 200 einen Momentenarm um diese Schwenkachse, so dass ein Schwenkvorgang des Trägers 26 durchgeführt werden kann. Das Lager 190 des ersten Lenkers 194 liegt in dieser Stellung beinahe auf einer Geraden durch die beiden Lager 194, 200. Der Kolben 208 greift mit einem relativ geringen Abstand zu dem Lager 190, z. B. ein Drittel bis ein Viertel der Länge des Lenkers 184, an diesem an.

Dieses Ausführungsbeispiel wird dadurch bereichert, dass eine Verriegelungsvorrichtung 204 mit einem Haken 205, einer Stange 207, einem Lager 209 und einem Lager 211 für die Verriegelung des Trägers 26 in seiner unteren Endstellung vorgesehen ist. Die Stange 207 ist ziemlich mittig auf dem ortsfesten Lager 209 vertikal schwenkbar aufgenommen und einerseits, nämlich in der Zeichnung links, in dem Lager 211 mit dem unteren Endbereich des Betätigungsmittels 182 vertikal schwenkbar verbunden und andererseits mit dem Haken 205 versehen. Der Haken 205 ist so ausgebildet und angeordnet, dass er einen Anschlag 213 an dem Träger 26 hintergreifen und halten kann. Die Verriegelungsvorrichtung 204 wird dadurch entriegelt, dass das Betätigungsmittel 182, bzw. dessen Kolben 208, ausgefahren wird und zunächst die Stange 207 mit Blick auf die Zeichnung nach unten drückt. Dabei wird der Haken 205 von dem Anschlag 213 abgehoben, und der Träger 26 kann nach oben geschwenkt werden. Die Verriegelungsvorrichtung 204 wird geschlossen, indem das Betätigungsmittel 182 eingefahren wird. Ein derartige Verriegelungsvorrichtung 204 kann auch bei den anderen Ausführungsformen analog angewandt werden.

Zum Anheben des Trägers 26, d. h. zum Öffnen des Ballenpressraums 12 wird die Betätigungsvorrichtung 182 ausgefahren. Dabei wird zunächst der Haken 205 angehoben und der Träger 26 entsperrt. Dann drückt der Kolben 208 auf den Lenker 184 in Richtung 212, um den Träger 26 aus einer unteren Endstellung heraus zu bewegen. In diesem Fall wirkt der Hebelarm zwischen dem Lager 194 und dem Lager 48. Durch diese Betätigung vergrößert sich ein Winkel δ zwischen den beiden Lenkern 184 und 186, und der Träger 26 des Auslasstores 56 wird gezwungen, um sein Lager 48 in Richtung 214 zu schwenken. Der Träger 26 erreicht eine mittlere Position, wie in Figur 15 dargestellt. In dieser Stellung und mit Blick auf Figur 15 befinden sich beide Lager 194, 200 auf der rechten Seite des Lagers 48 und die Bewegung des Kolbens 208 wirkt bereits auf das Lager 200. Wird der Kolben 208 weiter ausgefähren, so erreicht der Träger 26 seine zweite Endstellung, wie in Figur 16 gezeigt. In dieser Stellung befindet sich das Lager 194 direkt oberhalb des Lagers 48, während sich das Lager 200 noch auf der rechten Seite des Lagers 48 befindet. Während des Schwenkvorgangs bewegen sich also zwei Lager 194, 200 auf einer im wesentlichen eigenen kreisförmigen Bahn um das Lager 48.

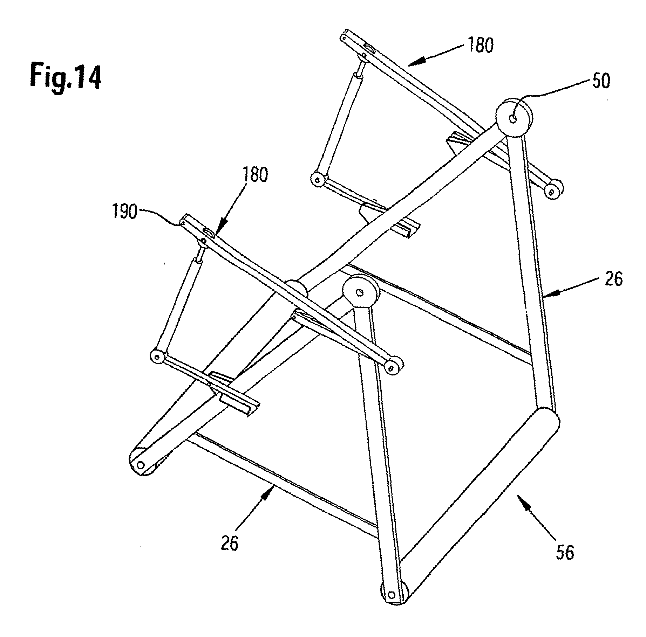

Figur 14 zeigt das gesamte Auslasstor 56 mit jeweils einer Betätigungsvorrichtung 180 an jedem Träger 26.

## Patentansprüche

1. Rundballenpresse (10) mit Seitenwänden (38) und einem Auslasstor (56), das um ein Lager (48) mit einer innerhalb der vertikalen Erstreckung der Seitenwände (38) quer verlaufenden Schwenkachse vertikal schwenkbar ist, wozu wenigstens ein Betätigungsmittel (72, 74, 112, 114, 182) einerseits ortsfest an der Rundballenpresse (10) und andererseits mittelbar oder unmittelbar beweglich an dem Auslasstor (56) angreift, wobei das Betätigungsmittel (72, 74, 112, 114, 182) oder ein mit diesem verbundenes Gestänge (115, 183) abwechselnd oder gleichzeitig über mehrere Lager (96, 98, 126, 136, 194, 200) an dem Auslasstor (56) angreift, die um die Schwenkachse des Auslasstors (56) herum und zu dieser beabstandet auf verschiedenen radialen Linien liegen, **dadurch gekennzeichnet, dass** die Lager (48, 96, 98, 126, 200) des Gestänges (115, 183) oder der Betätigungsmittel (72, 74) an dem Auslasstor (56) und der Rundballenpresse (10) derart angeordnet sind, dass wenigstens eine durch sie führende Gerade während der Schwenkbewegung des Auslasstors (56) dessen Schwenkachse überstreicht.

2. Rundballenpresse nach Anspruch 1, **dadurch gekennzeichnet, dass** an dem Auslasstor (56) zwei Betätigungsmittel (72, 74) angreifen,

3. Rundballenpresse nach Anspruch 1, **gekennzeichnet durch** zwei Lenker (116, 118) eines Gestänges (115), die gelenkig miteinander verbunden sind, die von jeweils einem Betätigungsmittel (112, 114) beaufschlagt werden und die zwischen einem ortsfesten Lager (140) und dem Auslasstor (56) wirksam sind.

4. Rundballenpresse nach Anspruch 2 oder 3, **dadurch gekennzeichnet, dass** die Wirklinien mehrerer Betätigungsmittel (72 und 74, bzw. 112 und 114) zueinander geneigt verlaufen.

5. Rundballenpresse nach Anspruch 1, **gekennzeichnet durch** zwei Lenker (184, 186) eines Gestänges (183), die gelenkig miteinander auf einer Seite der Schwenkachse verbunden sind, von denen ein Lenker (184) von einem Betätigungsmittel (182) beaufschlagt wird und einenends ortsfest gelagert ist, und von denen der andere Lenker (186) auf der anderen Seite der Schwenkachse gelenkig mit dem Auslasstor (56) verbunden ist.

6. Rundballenpresse nach einem oder mehreren der vorherigen Ansprüche, **dadurch gekennzeichnet, dass** auf beiden Seiten der Rundballenpresse vorgesehene sich entsprechende Lenker (184, 118) mittels einer Spange (166) zu einem U-förmigen Bügel (162) zusammengefasst sind.

7. Rundballenpresse nach einem oder mehreren der vorherigen Ansprüche 3 bis 6, **dadurch gekennzeichnet, dass** einer der beiden Lenker (116) zueinander geneigt verlaufende Schenkel (128, 130) aufweist und das Betätigungsmittel (114) zwischen dem anderen Lenker (118) und dem Endbereich des geneigt zu ihm verlaufenden Schenkels (130) wirkt.

8. Rundballenpresse nach einem oder mehreren der vorherigen Ansprüche, **dadurch gekennzeichnet, dass** das Betätigungsmittel (182) auf eine Verriegelungsvorrichtung (204) für das Auslasstor (56) wirkt.

9. Rundballenpresse nach Anspruch 2, **dadurch gekennzeichnet, dass** ein Betätigungsmittel (72) auf einer Seite und das andere Betätigungsmittel (74) auf der anderen Seite der Rundballenpresse (10) auf das Auslasstor (56) wirkt.

10. Rundballenpresse nach einem oder mehreren der vorherigen Ansprüche, **dadurch gekennzeichnet, dass** die Betätigungsmittel (72, 74, 112, 114, 182) in zwei Richtungen wirkend ausgebildet sind und vorzugsweise hydraulisch betrieben werden.

## Claims

1. Round baler (10), comprising side walls (38) and an outlet gate (56) which is vertically pivotable about a bearing (48) having a pivot axis running transversely within the vertical extent of the side walls (38), for which at least one actuating means (72, 74, 112, 114, 182) acts, on the one hand, in a fixed manner upon the round baler (10) and, on the other hand, in an indirectly or directly movable manner upon the outlet gate (56), wherein the actuating means (72, 74, 112, 114, 182) or a linkage (115, 183) connected thereto acts alternately or simultaneously upon the outlet gate (56) via a plurality of bearings (96, 98, 126, 136, 194, 200), which are situated around the pivot axis of the outlet gate (56) and at a distance therefrom on various radial lines, **characterized in that** the bearings (48, 96, 98, 126, 200) of the linkage (115, 183) or of the actuating means (72, 74) are disposed on the outlet gate (56) and the round baler (10) such that at least one straight line running through them, during the pivot motion of the outlet gate (56), sweeps over the pivot axis thereof.

2. Round baler according to Claim 1, **characterized in that** two actuating means (72, 74) act upon the outlet gate (56).

3. Round baler according to Claim 1, **characterized by** two links (116, 118) of a linkage (115), which are articulately connected to one another, which are governed respectively by an actuating means (112, 114) and which are operative between a fixed bearing (140) and the outlet gate (56).

4. Round baler according to Claim 2 or 3, **characterized in that** the active lines of a plurality of actuating means (72 and 74, or 112 and 114) run at an angle to one another.

5. Round baler according to Claim 1, **characterized by** two links (184, 186) of a linkage (183), which are articulately connected to one another on one side of the pivot axis, whereof one link (184) is governed by an actuating means (182) and is fixedly mounted at one end, and whereof the other link (186), on the other side of the pivot axis, is articulately connected to the outlet gate (56).

6. Round baler according to one or more of the previous claims, **characterized in that** mutually corresponding links (184, 118) provided on either side of the round baler are combined by means of a clasp (166) into a U-shaped bow (162).

7. Round baler according to one or more of the previous Claims 3 to 6, **characterized in that** one of the two links (116) has branches (128, 130) running at an angle to one another, and the actuating means (114) acts between the other link (118) and the end region of the branch (130) running at an angle thereto.

8. Round baler according to one or more of the previous claims, **characterized in that** the actuating means (182) acts upon a locking device (204) for the outlet gate (56).

9. Round baler according to Claim 2, **characterized in that** one actuating means (72) acts on one side and the other actuating means (74) acts on the other side of the round baler (10) upon the outlet gate (56).

10. Round baler according to one or more of the previous claims, **characterized in that** the actuating means (72, 74, 112, 114, 182) are configured so as to act in two directions and are preferably operated hydraulically.

## Revendications

1. Presse à balles cylindriques (10) comportant des parois latérales (38) et une porte d'éjection (56), qui est apte à pivoter verticalement autour d'un palier (48) avec un axe de pivotement orienté transversalement à l'intérieur de la dimension verticale des parois latérales (38), au moins un moyen d'actionnement (72, 74, 112, 114, 182) étant appliqué à cet effet, d'une part, de manière fixe contre la presse à balles cylindriques (10) et, d'autre part, de manière indirectement ou directement mobile contre la porte d'éjection (56), sachant que le moyen d'actionnement (72, 74, 112, 114, 182) ou une tringlerie (115, 183), reliée à celui-ci, s'applique contre la porte d'éjection (56) en alternance ou simultanément par l'intermédiaire de plusieurs paliers (96, 98, 126, 136, 194, 200), qui sont situés tout autour de l'axe de pivotement de la porte d'éjection (56) et sur différentes lignes radiales à distance de celle-ci, **caractérisée en ce que** les paliers (48, 96, 98, 126, 200) de la tringlerie (115, 183) ou du moyen d'actionnement (72, 74) sont agencés au niveau de la porte d'éjection (56) et de la presse à balles cylindriques (10), de telle sorte qu'au moins une droite passant par celles-ci couvre l'axe de pivotement de la porte d'éjection (56) pendant le mouvement de pivotement de cette dernière.

2. Presse à balles cylindriques selon la revendication 1, **caractérisée en ce que** deux moyens d'actionnement (72, 74) s'appliquent contre la porte d'éjection (56).

3. Presse à balles cylindriques selon la revendication 1, **caractérisée en ce que** deux bras oscillants (116, 118) d'une tringlerie (115) sont reliés l'un à l'autre de manière articulée, sont sollicités chacun par un moyen d'actionnement (112, 114) et agissent entre un palier (140) localement fixe et la porte d'éjection (56).

4. Presse à balles cylindriques selon la revendication 2 ou 3, **caractérisée en ce que** les lignes d'action de plusieurs moyens d'actionnement (72 et 74, respectivement 112 et 114) sont inclinées les unes par rapport aux autres.

5. Presse à balles cylindriques selon la revendication 1, **caractérisée par** deux bras oscillants (184, 186) d'une tringlerie (183), qui sont reliés l'un à l'autre de manière articulée sur un côté de l'axe de pivotement, l'un desdits bras oscillants (184) étant sollicité par un moyen d'actionnement (182) et logé de manière localement fixe à une extrémité, et l'autre desdits bras oscillants (186) étant relié de manière articulée avec la porte d'éjection (56) sur l'autre côté de l'axe de pivotement.

6. Presse à balles cylindriques selon une ou plusieurs des revendications précédentes, **caractérisée en ce que** des bras oscillants (184, 118) correspondants, prévus sur les deux côtés de la presse à balles cylindriques (10), sont assemblés au moyen d'un raccord (166) pour former un étrier (162) en forme de U.

7. Presse à balles cylindriques selon une ou plusieurs des revendications 3 à 6, **caractérisée en ce que** l'un des deux bras oscillants (116) comporte des branches (128, 130) inclinées l'une par rapport à l'autre et le moyen d'actionnement (114) agit entre l'autre bras oscillant (118) et la zone d'extrémité de la branche (130) inclinée par rapport à celui-ci.

8. Presse à balles cylindriques selon une ou plusieurs des revendications précédentes, **caractérisée en ce que** le moyen d'actionnement (182) agit sur un dispositif de verrouillage (204) de la porte d'éjection (56).

9. Presse à balles cylindriques selon la revendication 2, **caractérisée en ce qu'**un moyen d'actionnement (72) agit sur la porte d'éjection (56) sur un côté de la presse à balles cylindriques (10) et l'autre moyen d'actionnement (74) agit sur la porte d'éjection (56) sur l'autre côté de la presse à balles cylindriques (10).

10. Presse à balles cylindriques selon une ou plusieurs des revendications précédentes, **caractérisée en ce que** les moyens d'actionnement (72, 74, 112, 114, 182) sont réalisés de manière à agir dans deux directions et sont actionnés de préférence par voie hydraulique.
